# EUROPEAN PATENT SPECIFICATION

(11) **EP 0 573 139 B1**
(45) Date of publication and mention of the grant of the patent: **14.02.1996**
(21) Application number: 93302079.4
(22) Date of filing: 18.03.1993
(51) Int. Cl.: B60J 10/04

(54) **Sealing and guiding arrangements**
Dichtungs-und Führungsvorrichtung
Dispositif d'étanchéité et de guidage

(30) Priority: 05.06.1992 GB 9211982
(43) Date of publication of application: 08.12.1993
(73) Proprietor: DRAFTEX INDUSTRIES LIMITED, Edinburgh, EH3 6YY, Scotland (GB)
(72) Inventor: Eckart, Ralf, 41748 Viersen (DE)
(74) Representative: Foster, David Martyn

(56) References cited:
- EP-A- 0 279 998
- DE-A- 4 017 813
- FR-A- 2 631 075
- US-A- 5 168 668

## Description

The invention relates to a sealing and guiding arrangement for mounting along at least part of a substantially rigid window frame of a window opening in a door of a motor vehicle, comprising a glass receiving strip made of flexible material and running along at least part of the periphery of the window opening and mounted on the window frame, the glass receiving strip defining a glass-receiving channel having a first channel wall made of flexible material running along the outside of the window opening adjacent to the frame so that the inner face of the first channel wall locates against the outside surface of a window glass when an edge thereof is received by the glass-receiving strip, and a stiff trim strip running along the frame alongside the first channel wall.

Such an arrangement is known from EP-A-0 279 998. However, in this known arrangement the first channel wall is made of unsupported plastics material. The lack of a firm support against the outside surface of the window glass can be disadvantageous when, for example, the ambient pressure increases under the vehicle, tending to force the glass outwardly. the invention aims to overcome this problem.

According to the invention, therefore, the known arrangement is characterised in that the stiff trim strip has a stiff extension which overlaps the outside of the first channel wall and engages the wall to strengthen and support it.

In this way, therefore, the trim strip is enabled to carry out a dual purpose, that is, not only trimming the glass-receiving strip but supporting the outside of the first channel wall.

Further developments in line with the invention defined in claim 1 are referred to in the dependent claims 2 to 19.

Window pane sealing and guiding arrangements for motor vehicle bodies and embodying the invention will now be described, by way of example only, with reference to the accompanying diagrammatic drawings in which:
Figure 1 is a diagrammatic perspective side view of a vehicle door and window.
Figure 2 is a diagrammatic section of one of the sealing and guiding arrangements taken on the line II-II of Figure 1 with the window glass in its lowered position;
Figure 3 corresponds to Figure 2 but shows the window glass raised;
Figure 4 is a perspective view corresponding to Figure 3;
Figure 5 is an end view of a sealing and guiding strip forming part of the sealing and guiding arrangement shown in Figures 2 and 3 but removed from the vehicle body;
Figure 6 is an end view of a gripping element which forms part of the sealing and guiding arrangement shown in Figures 2 and 3;
Figure 7 shows a section on the line VII-VII of Figure 1 but with the gripping element of Figure 6 in the process of being fitted into position;
Figure 8 is a section on the line VIII-VIII of Figure 1;
Figure 9 shows a modified form of the sealing and guiding arrangement;
Figure 10 shows a view corresponding to Figure 3 but of a further modified construction;
Figure 11 shows a view corresponding to Figure 8 of yet another modified form of construction.

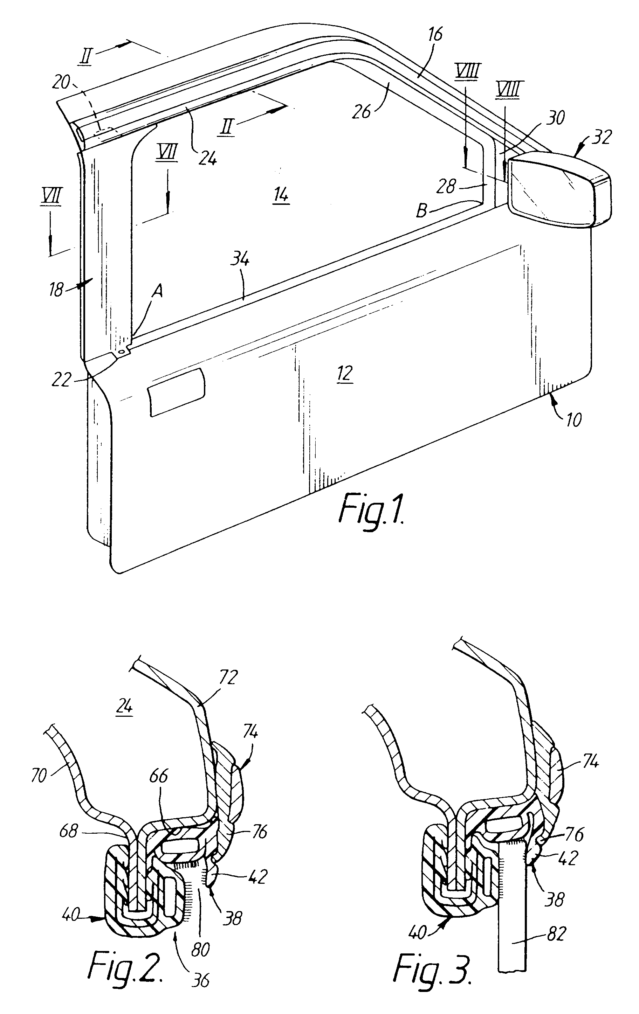

Figure 1 shows a perspective view of the front door 10 of a vehicle body. The door has an enclosed lower part 12 and an upper part 14 providing the normal window opening which is surrounded by the window frame 16 carried by the lower part 12. A window pane for the window opening 14 can be raised from and lowered into the lower part 12 of the door by the usual window mechanism.

The rearmost part of the window frame 16 is covered by a trim strip 18 which may be made of hard plastics material. This is secured in position by screws or other fixtures shown at 20 and 22. These are normally covered by a bright trim strip which is omitted in Figure 1.

This bright trim, when fitted, runs along the top 24 of the frame 16 and down the inclined front edge 26 of the frame. This inclined front edge runs into a vertical portion 28 alongside which is mounted a plate 30 which supports the rear view mirror 32.

The window sealing and guiding arrangement now to be described extends from point A (Fig. 1), up the rearmost edge of the frame 16 (the part covered by the trim plate 18), along the top 24, down the inclined front edge 26, and then down the vertical part 28 to terminate at the point B.

A normal waist seal (not shown) runs along each side of the mouth of the opening 34 through which the window glass moves into and from the lower closed part of the door.

The sealing and guiding arrangement defines a channel 80 having a mouth facing inwardly of the window opening 14 for receiving and guiding the window glass. In order to provide a so-called flush glass effect, the outside wall of this channel (that is, the wall on the outside of the window frame) needs to be thin so that, so far as possible, the outer surface of the window glass is flush with the outer face of the window frame 16. At the same time, though, this outer wall of the channel must be sufficiently strong to retain the window glass against pressures tending to force it outwardly - such as air pressure which can build up within a moving vehicle so as to be in excess of the external pressure.

Figure 2 shows the window sealing and guiding arrangement 36 where it runs along the top 24 of the window frame. The sealing and guiding arrangement 36 is made up of two parts. One of these parts is the glass receiving strip 38, and the other is a fixing element 40.

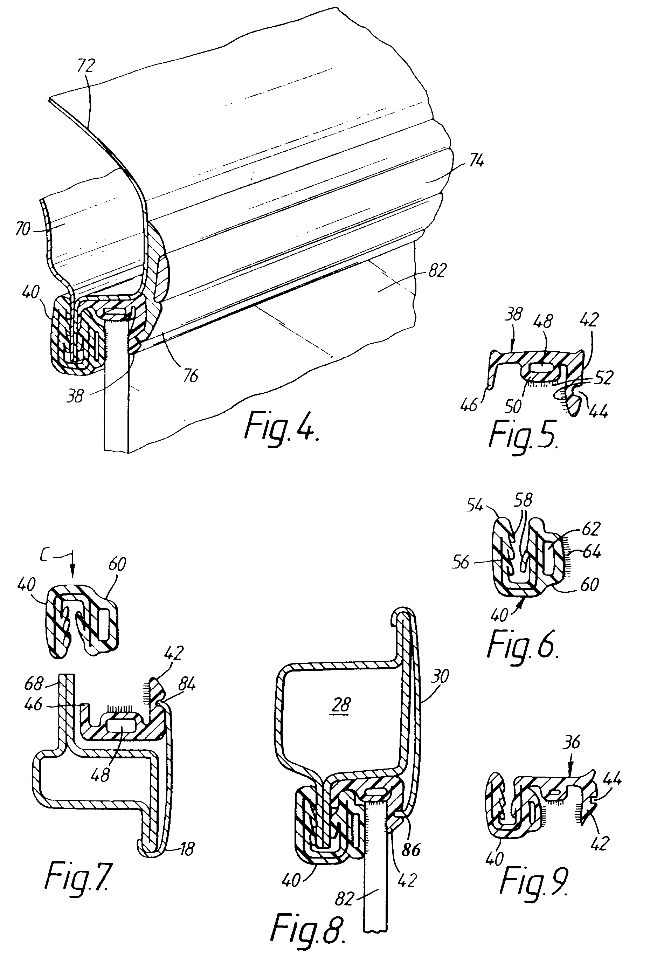

As shown most clearly in Figure 5, the glass receiving strip 38 is generally channel-shaped in cross-section. It has an outer wall 42 containing, in its outer face, a groove 44 running along its entire length - for a purpose to be described. On its opposite side, the strip 38 defines an anchor limb 46.

The strip 38 is extruded integrally from flexible material, preferably extruded rubber material. The rubber material in the base of the channel whose side walls are formed by the wall 42 and the anchor limb 46 is extruded to define a hollow chamber 48 supporting a relatively flexible platform 50 (See Fig. 5). The face of this platform 50 together with the inner face of the wall 42 are covered in flock, as shown at 52, or are similarly treated.

The fixing element 40 (Fig. 6) is channel-shaped in cross-section and is made of extruded plastics or rubber material 54 in which may be embedded a channel-shaped metal carrier 56. The metal carrier 56 may take any suitable form. For example, it may be made of apertured channel-shaped metal. Instead, it may be made of a series of U-shaped metal elements arranged side-by-side along the length of the carrier to define a channel and either disconnected from each other or connected to each other such as by integral connecting links. In another form, it could be made of wire looped to and fro. Other forms of carrier are possible. Preferably, the carrier is incorporated into the extruded material 54 by means of a cross-head extrusion process.

The extruded material 54 is (in this example) extruded to provide inwardly directed gripping lips 58 on the facing internal walls of the channel. There may be a greater or lesser number of such lips and they need not be of the same number or of the same size on opposite sides of the channel.

In addition, the gripping part 40 carries a sealing extension 60. This is made of flexible material such as rubber or plastics material. It may be manufactured separately and secured onto the outside wall of the channel of the gripping part 40, such as by adhesive. Preferably, however, it is co-extruded with the extruded material 54. The sealing part 60 defines a hollow chamber 62 (to increase its flexibility) and its outer face is preferably covered with flock 64, or similar material.

Figure 2 shows how the glass receiving strip 38 of the sealing and guiding arrangement 36 is positioned on a surface 66 of the upper part 24 of the window frame, and how the fixing element 40 is fitted in position over the flange 68 which is formed where the inner and outer panels 70 and 72 of the door are welded together along the window frame. When fitted in position like this, the fixing element 40 embraces not only the flange 68 but also the anchor limb 46 of the glass receiving part so as to hold the latter in position on the surface 66. In addition, however, the bright trim strip 74, which runs along the window frame 16, and which is normally made of metal, has a lip 76 running along its lower edge which engages within the groove 44 (Figure 5) in the outer wall 42 of the strip 38.

In this way, the sealing and guiding arrangement 36 is held firmly in position in the window frame. The fixing element 40 is sized so as to be a tight fit on the flange 68 (and over the anchor limb 46), its gripping resilience being provided by the embedded metal carrier 56 and further gripping effect being provided by the gripping lips 58.

Therefore, the glass receiving strip 38 and the fixing element 40 together define a window glass receiving channel 80. Figures 3 and 4 correspond to Figure 2 but show the window glass 82 as having been raised into position within this channel 80 so as to slide over the flocked surfaces and to flatten, at least partially, the chamber 48 (see Fig. 5) in the base of the channel 80 so as to provide a cushioned sealing effect. Further cushioned sealing effect is provided by the sealing part 60 of the fixing element 40.

Figure 7 shows the sealing and guiding arrangement along the vertical rear part of the window frame 16, that is, the part covered by the trim plate 18. By way of explanation, Figure 7 shows the fixing element 40 before it is actually placed onto the flange 68 and over the anchor limb 46 of the glass receiving part 38. It will be noted that, over this vertical rear part of the window frame, the outer trim plate 18 has an extended lip 84 which engages within the groove 44 in the outer wall 42 of the glass receiving part 38. The fixing element 40 is fixed into position by moving it in the direction of the arrow C.

Along the sloping front edge 26 (see Fig. 1) of the window frame, the sealing and guiding arrangement is substantially as illustrated in Figures 2 and 3. The bright trim strip 74 runs down this sloping edge and its lip 76 continues to engage within the groove 44 in the glass receiving part 38.

Figure 8 shows the situation along the short vertical front part 28 of the window frame 16 (see Fig. 1). Here the sealing and guiding arrangement 36 is of the same construction but, over this region, a lip 86 in the rear mirror fixing plate 30 engages in the groove 44 of the strip 38. Normally, the two parts 38 and 40 of the sealing and guiding arrangement 36 will each extend continuously as a respective single piece, around the window opening from point A to point B (Figure 1).

Because the glass receiving part 38 is made of extruded plastics or rubber material and contains no metal reinforcement, it can be easily bent to follow curves and corners in the window opening. Nevertheless, because its outer wall 42 is provided with the groove 44 which is engaged around the window opening by supporting lips (carried by the bright trim strip 74, by the trim strip 18, and by the rear mirror fixing plate 30 respectively), the strip 38 is nevertheless given sufficient strength and rigidity for it (and its outer wall 42 in particular) to be able to hold the window glass 82 securely in position.

Figure 9 shows a modification in which the two parts 38 and 40 of the sealing and guiding arrangement 36 are formed in one piece such as by co-extrusion instead of separately. The co-extrusion process may be a cross-head extrusion process so that the fixing element 40 incorporates the channel-shaped metal carrier 56. The different parts of the sealing and guiding arrangement may be extruded to have different hardnesses.

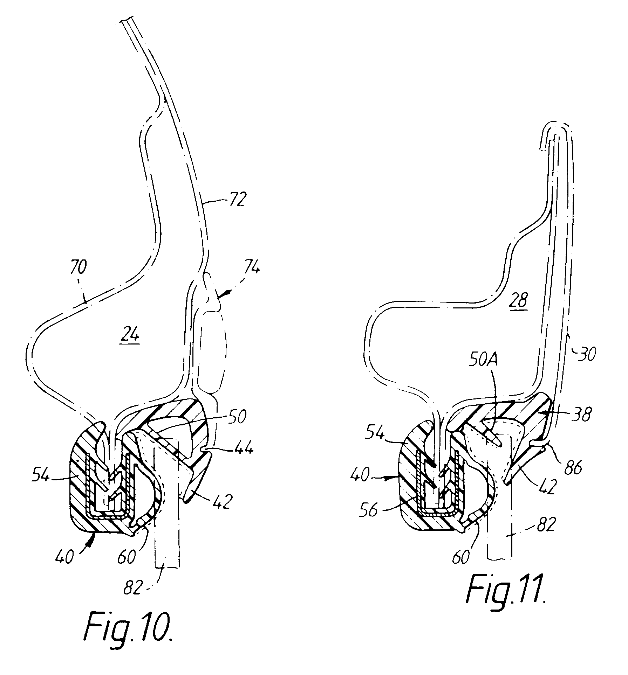

In the modification shown in Figure 10, the (inverted) base of the glass-receiving strip 38 is formed slightly differently, with the platform 50 extending completely across this base. In addition, the strip 38 does not have the anchor limb 46 (see Figure 5) which in the other embodiments extends into the interior of the channel of the fixing element 40. Instead, the fixing element 40 merely presses on the edge of the corresponding part of the strip 38.

The latter point also applies to the modified form shown in Figure 11. In addition, in the latter the platform 50 is replaced by a lip 50A.

## Claims

1. A sealing and guiding arrangement for mounting along at least part of a substantially rigid window frame (16) of a window opening (14) in a door (10) of a motor vehicle, comprising a glass receiving strip (38) made of flexible material and running along at least part of the periphery of the window opening (14) and mounted on the window frame (16), the glass receiving strip (38) defining a glass-receiving channel (80) having a first channel wall (42) made of flexible material running along the outside of the window opening (14) adjacent to the frame so that the inner face of the first channel wall (42) locates against the outside surface of a window glass (82) when an edge thereof is received by the glass-receiving strip (38), and a stiff trim strip (74,30,18) running along the frame alongside the first channel wall (42), characterised in that the stiff trim strip (74,30,18) has a stiff extension (76,84,86) which overlaps the outside of the first channel wall (42) and engages the wall (42) to strengthen and support it.

2. An arrangement according to claim 1, characterised in that the outer face of the first channel wall (42) is extended to provide a slot for tightly receiving a stiff strip (74) constituting the support member and stiffening the said side (42) of the channel.

3. An arrangement according to any preceding claim, characterised in that part of the opposite side of the channel is held to the frame (16) by securing means (40).

4. An arrangement according to claim 3, characterised in that the securing means (40) comprises a channel-shaped fixing element (40) which embraces a mounting flange (68) or the like forming part of the frame (16).

5. An arrangement according to claim 4, characterised in that the fixing element (40) is integrally connected to the said part of the opposite side of the channel of the strip (e.g. Fig. 9).

6. An arrangement according to claim 4, characterised in that the fixing element (40) is separate from the strip and abuts the said part of the opposite side of the channel of the strip (e.g. Figs. 10-12).

7. An arrangement according to claim 4, characterised in that the fixing element (40) is separate from the strip and the channel of the fixing element (40) embraces not only the mounting flange (68) or the like but also a limb (46) forming an extension of the said part of the opposite side of the channel of the strip.

8. An arrangement according to any one of claims 4 to 7, characterised in that the fixing element (40) is made of extruded flexible material incorporating metal reinforcement.

9. An arrangement according to claim 1, characterised in that the opposite wall of the channel (80) is held on the frame (16) by a fixing element (40) which thus helps to secure the strip (38) to the frame (16).

10. An arrangement according to claim 9, characterised in that the fixing element is channel-shaped (40) in cross-section for embracing attachment to a mounting flange (68) or the like which runs along the window opening (14) and is part of the window frame (16).

11. An arrangement according to claim 10, characterised in that the fixing element (40) is integrally connected to the said opposite wall of the channel of the strip.

12. An arrangement according to claim 10, characterised in that the fixing element (40) is separate from the strip (38).

13. An arrangement according to claim 12, characterised in that the fixing element (40) embraces not only the mounting flange (68) but also a limb (46) which is an extension of the said opposite wall of the channel of the strip (38).

14. An arrangement according to any one of claims 10 to 13, characterised in that the fixing element (40) incorporates embedded metal reinforcement (56).

15. An arrangement according to any one of claims 10 to 14, characterised in that an outer wall of the fixing element (40) defines at least part of the side wall of the glass-receiving channel (38) on the inside of the window opening (14).

16. An arrangement according to claim 15, characterised in that the said outer wall of the fixing element (40) carries an auxiliary soft sealing part (60).

17. An arrangement according to any preceding claim, characterised in that the trim strip is a bright trim strip running along at least part of the outside of the frame.

18. An arrangement according to any one of claims 9 to 16, characterised in that the support means is a plate (30) attached to the window frame (16) adjacent a rear view mirror (32) carried by the door (10).

19. An arrangement according to any preceding claim, characterised in that the said formation is a longitudinally extending groove (44) and in which the support means (76;18;30) is formed with a mating lip (84;80).

## Patentansprüche

1. Dichtungs- und Führungsvorrichtung zur Montage entlang wenigstens einem Teil eines im wesentlichen steifen Fensterrahmens (16) einer Fensteröffnung (14) in einer Tür (10) eines Kraftfahrzeuges mit einer Glasaufnahmeleiste (38), die aus einem flexiblen Material hergestellt und auf dem Fensterrahmen (16) angeordnet entlang wenigstens einem Teil des Umfangs der Fensteröffnung (14) verläuft, wobei die Glasaufnahmeleiste (38) einen Glasaufnahmekanal (80) bestimmt, der eine aus einem flexiblen Material hergestellte erste Kanalwand (42) aufweist, die angrenzend an den Rahmen so entlang der Außenseite der Fensteröffnung (14) verläuft, daß die Innenfläche der ersten Kanalwand (42) gegen die Außenfläche eines Fensterglases (82) anliegt, wenn eine Kante des Fensterglases (82) in der Glasaufnahmeleiste (38) aufgenommen ist, sowie mit einer steifen Dekorationsleiste (74, 30, 18), die längsseits der ersten Kanalwand (42) entlang dem Rahmen verläuft, **dadurch gekennzeichnet**, daß die steife Dekorationsleiste (74, 30, 18) eine steife Verlängerung (76, 84, 86) aufweist, die die Außenseite der ersten Kanalwand (42) überlappt und in die Wand (42) eingreift, um diese zu versteifen und zu stützen.

2. Vorrichtung nach Anspruch 1, dadurch gekennzeichnet, daß die Außenfläche der ersten Kanalwand (42) verlängert ist, um einen Schlitz zur festen Aufnahme einer steifen Leiste (74) vorzusehen, die einen Stützteil darstellt und die Wand (42) des Kanals versteift.

3. Vorrichtung nach einem der vorhergehenden Ansprüche, dadurch gekennzeichnet, daß der Teil der gegenüberliegenden Seite des Kanals durch Befestigungsmittel (40) an dem Rahmen (16) gehalten wird.

4. Vorrichtung nach Anspruch 3, dadurch gekennzeichnet, daß das Befestigungsmittel (40) ein kanalförmiges Befestigungselement (40) umfaßt, das einen Montageflansch (68) oder einen ähnlich ausgebildeten Teil des Rahmens (16) umgreift.

5. Vorrichtung nach Anspruch 4, dadurch gekennzeichnet, daß das Befestigungselement (40) einstückig mit dem Teil der gegenüberliegenden Seite des Kanals der Leiste verbunden ist (z. B. Fig. 9).

6. Vorrichtung nach Anspruch 4, dadurch gekennzeichnet, daß das Befestigungselement (40) separat von der Leiste ausgebildet ist und an dem Teil der gegenüberliegenden Seite des Kanals der Leiste anliegt (z. B. Fig. 10 und 11).

7. Vorrichtung nach Anspruch 4, dadurch gekennzeichnet, daß das Befestigungselement (40) separat von der Leiste ausgebildet ist und der Kanal des Befestigungselements (40) nicht nur den Montageflansch (68) oder dergleichen sondern auch einen Bogen (46) umgreift, der eine Verlängerung des Teils der gegenüberliegenden Seite des Kanals der Leiste darstellt.

8. Vorrichtung nach einem der Ansprüche 4 bis 7, dadurch gekennzeichnet, daß das Befestigungselement (40) aus einem extrudierten flexiblen Material hergestellt ist, in das eine metallene Verstärkung eingelegt ist.

9. Vorrichtung nach Anspruch 1, dadurch gekennzeichnet, daß die gegenüberliegende Wand des Kanals (80) durch ein Befestigungselement (40) auf dem Rahmen (16) gehalten wird, das somit hilft, die Leiste (38) auf dem Rahmen (16) zu sichern.

10. Vorrichtung nach Anspruch 9, dadurch gekennzeichnet, daß das Befestigungselement (40) zur umgreifenden Befestigung an einem Montageflansch (68) oder dergleichen im Querschnitt kanalförmig ausgebildet ist, wobei der Montageflansch (68) oder dergleichen entlang der Fensteröffnung (14) verläuft und einen Teil des Fensterrahmens (16) darstellt.

11. Vorrichtung nach Anspruch 10, dadurch gekennzeichnet, daß das Befestigungselement (40) einstückig mit der gegenüberliegenden Wand des Kanals der Leiste verbunden ist.

12. Vorrichtung nach Anspruch 10, dadurch gekennzeichnet, daß das Befestigungselement (40) separat von der Leiste (38) ausgebildet ist.

13. Vorrichtung nach Anspruch 12, dadurch gekennzeichnet, daß das Befestigungselement (40) nicht nur den Montageflansch (68), sondern auch einen Bogen (46) umgreift, der eine Verlängerung der gegenüberliegenden Wand des Kanals der Leiste (38) darstellt.

14. Vorrichtung nach einem der Ansprüche 10 bis 13, dadurch gekennzeichnet, daß in das Befestigungselement (40) eine eingebettete metallene Verstärkung (56) eingearbeitet ist.

15. Vorrichtung nach einem der Ansprüche 10 bis 14, dadurch gekennzeichnet, daß eine Außenwand des Befestigungselements (40) wenigstens einen Teil des Glasaufnahmekanals (80) auf der Innenseite der Fensteröffnung (14) bestimmt.

16. Vorrichtung nach Anspruch 15, dadurch gekennzeichnet, daß die Außenwand des Befestigungselements (40) ein zusätzliches weiches Dichtungsteil (60) trägt.

17. Vorrichtung nach einem der vorhergehenden Ansprüche, dadurch gekennzeichnet, daß die Dekorationsleiste eine glänzende Dekorationsleiste ist, die wenigstens entlang einen Teil der Außenseite des Rahmens verläuft.

18. Vorrichtung nach einem der Ansprüche 9 bis 16, dadurch gekennzeichnet, daß das Stützteil eine Platte (30) ist, die in der Nähe eines von der Tür (10) getragenen Rückspiegels (32) am Fensterrahmen (16) angeordnet ist.

19. Vorrichtung nach einem der vorhergehenden Ansprüche, dadurch gekennzeichnet, daß das Gebilde eine sich längs erstreckende Nut (44) ist, in die das Stützteil (76; 18; 30) mit einer passenden Lippe (84, 80) eingepaßt ist.

## Revendications

1. Agencement d'étanchéité et de guidage destiné à être monté le long d'au moins une partie d'un cadre de fenêtre (16) sensiblement rigide d'une ouverture de fenêtre (14) dans une porte (10) d'un véhicule à moteur, comprenant une bande de réception de vitre (38) réalisée en un matériau flexible et courant le long d'au moins une partie de la périphérie de l'ouverture de fenêtre (14) et montée sur le cadre de fenêtre (16), la bande de réception de vitre (38) définissant un conduit de réception de vitre (80) ayant une première paroi de conduit (42) réalisée en matière flexible et courant le long de l'extérieur de l'ouverture de fenêtre (14) en position adjacente au cadre, de sorte que la face intérieure de la première paroi de conduit (42) se place contre la surface extérieure d'une vitre de fenêtre (82) lorsqu'un bord de celle-ci est reçu par la bande de réception de vitre (38), et une bande d'habillage rigide (74, 30, 18) courant le long du cadre le long de la première paroi de conduit (42), caractérisé en ce que la bande d'habillage rigide (74, 30, 18) possède un prolongement rigide (76, 84, 86) qui recouvre l'extérieur de la première paroi de conduit (42) et qui engage la paroi (42) pour la renforcer et la supporter.

2. Agencement selon la revendication 1, caractérisé en ce que la face extérieure de la première paroi de conduit (42) est prolongée pour réaliser une fente afin de recevoir de façon étanche une bande rigide (74) qui constitue l'élément de support et qui rend rigide ledit côté (42) du conduit.

3. Agencement selon l'une quelconque des revendications précédentes, caractérisé en ce qu'une partie du côté opposé du conduit est maintenue sur le cadre (16) par des moyens d'attache (30).

4. Agencement selon la revendication 3, caractérisé en ce que les moyens d'attache (40) comprennent un élément de fixation (40) en forme de canal qui embrasse une bride de montage (68) ou similaire, formant partie du cadre (16).

5. Agencement selon la revendication 4, caractérisé en ce que l'élément de fixation (40) est connecté de façon intégrée à ladite partie du côté opposé du conduit de la bande (exemple à la figure 9).

6. Agencement selon la revendication 4, caractérisé en ce que l'élément de fixation (40) est séparé de la bande et vient buter contre ladite partie du côté opposé du conduit de la bande (exemple aux figures 10 à 12).

7. Agencement selon la revendication 4, caractérisé en ce que l'élément de fixation (40) est séparé de la bande et le conduit de l'élément de fixation (40) embrasse non seulement la bride de montage (68) ou similaire, mais également un organe (46) formant un prolongement de ladite partie du côté opposé du conduit de la bande.

8. Agencement selon l'une quelconque des revendications 4 à 7, caractérisé en ce que l'élément de fixation (40) est réalisé en une matière flexible extrudée qui incorpore un renfort en métal.

9. Agencement selon la revendication 1, caractérisé en ce que la paroi opposée du conduit (80) est maintenue sur le cadre (16) par un élément de fixation (40) qui aide ainsi à attacher la bande (38) sur le cadre (16).

10. Agencement selon la revendication 9, caractérisé en ce que l'élément de fixation est en forme de conduit (40) en section transversale pour être attaché sur une bride de montage (68) ou similaire, en l'embrassant, qui court le long de l'ouverture de fenêtre (14) et qui fait partie du cadre de fenêtre (16).

11. Agencement selon la revendication 10, caractérisé en ce que l'élément de fixation (40) est connecté de façon intégrée à ladite paroi opposée du conduit de la bande.

12. Agencement selon la revendication 10, caractérisé en ce que l'élément de fixation (40) est séparé de la bande (38).

13. Agencement selon la revendication 12, caractérisé en ce que l'élément de fixation (40) embrasse non seulement la bride de montage (68) mais également un organe (46) qui est un prolongement de ladite paroi opposée du conduit de la bande (38).

14. Agencement selon l'une quelconque des revendications 10 à 13, caractérisé en ce que l'élément de fixation (40) incorpore un renfort en métal noyé (56).

15. Agencement selon l'une quelconque des revendications 10 à 14, caractérisé en ce qu'une paroi extérieure de l'élément de fixation (40) définit au moins une partie de la paroi latérale du conduit de réception de vitre (38) sur l'intérieur de l'ouverture de fenêtre (14).

16. Agencement selon la revendication 15, caractérisé en ce que ladite paroi extérieure de l'élément de fixation (40) porte une partie d'étanchéité souple auxiliaire (60).

17. Agencement selon l'une quelconque des revendications précédentes, caractérisé en ce que la bande d'habillage est une bande d'habillage brillante courant le long d'au moins une partie de l'extérieur du cadre.

18. Agencement selon l'une quelconque des revendications 9 à 16, caractérisé en ce que les moyens de support sont formés par une plaque (30) attachée au cadre de fenêtre (16) en position adjacente à un rétroviseur (32) porté par la porte (10).

19. Agencement selon l'une quelconque des revendications précédentes, caractérisé en ce que ladite formation est une gorge (44) qui s'étend longitudinalement, et dans laquelle les moyens de support (76 ; 18 ; 30) sont formés avec une lèvre correspondante (84 ; 80).
